(19) Europäisches Patentamt
European Patent Office
Office européen des brevets

(11) **EP 4 369 713 A1**

(12) **EUROPEAN PATENT APPLICATION**

(43) Date of publication:
**15.05.2024 Bulletin 2024/20**

(21) Application number: **23208598.5**

(22) Date of filing: **08.11.2023**

(51) International Patent Classification (IPC):
**H04N 19/503** (2014.01)    **H04N 19/597** (2014.01)

(52) Cooperative Patent Classification (CPC):
**H04N 19/503; H04N 19/597;** H04N 19/147

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2022   US 202263424427 P**
**03.11.2023   US 202318386845**

(71) Applicants:
• **Disney Enterprises, Inc.**
**Burbank, CA 91521 (US)**

• **ETH Zürich (Eidgenössische Technische Hochschule Zürich)**
**8092 Zürich (CH)**

(72) Inventors:
• **AZEVEDO, Roberto Gerson de Albuquerque**
**Burbank, 91521 (US)**
• **GOMES, Carlos Miguel Pina Vaz**
**Burbank, 91521 (US)**
• **SCHROERS, Christopher Richard**
**Burbank, 91521 (US)**

(74) Representative: **Dr. Weitzel & Partner**
**Patent- und Rechtsanwälte mbB**
**Friedenstrasse 10**
**89522 Heidenheim (DE)**

(54) **ENTROPY-CONSTRAINED NEURAL VIDEO REPRESENTATIONS**

(57)    A system includes a neural network (NN) having a matrix expansion block configured to construct a matrix representation of an input sequence, a component merging block configured to merge the matrix representation with a grid, an encoder configured to receive an output of the component merging block, a convolution stage configured to generate, using an output of the encoder, a multi-component representation of an output corresponding to the input sequence, and a convolutional upscaling stage configured to produce, using the multi-component representation of the output, an output sequence corresponding to the input sequence. A method for use by the system includes receiving an input sequence, modeling the input sequence to generate a neural network representation of the input sequence, compressing the neural network representation to generate a compressed neural network representation, and generating, from the compressed neural network representation, a compressed output sequence corresponding to the input sequence.

Fig. 4

EP 4 369 713 A1

**Description**

SUMMARY

The present invention refers to a system for encoding an input sequence, especially a video sequence.

BACKGROUND

Video compression is a long-standing and difficult problem that has inspired much research. The main goal of video compression is to represent a digital video with the minimum amount of storage requirements, while minimizing loss of quality. Although many advances have been made in the last decades in traditional video codecs, the advent of deep learning has inspired neural network-based approaches allowing new forms of video processing.

However, for the task of lossy video compression, existing neural video representation (NVR) methods typically continue to be outperformed by traditional techniques. That performance gap can be explained by the fact that current NVR methods: i) use architectures that do not efficiently obtain a compact representation of temporal and spatial input coordinates, and ii) minimize rate and distortion disjointly by first overfitting a network on a video and then using heuristic techniques such as post-training quantization or weight pruning to compress the model.

The present invention provides a system with the features of claim 1. The dependent claims describe preferred embodiments. Further, methods according to the invention for use by a system are disclosed.

An embodiment of the present invention is as follows:
A system comprising:

a matrix expansion block configured to construct a matrix representation of an input sequence;
a component merging block configured to merge the matrix representation with a grid;
an encoder configured to receive an output of the component merging block;
a convolution stage configured to generate, using an output of the encoder, a multi-component representation of an output corresponding to the input sequence; and
a convolutional upscaling stage configured to produce, using the multi-component representation of the output, an output sequence corresponding to the input sequence.

Preferably the system, wherein the multi-component representation of the output corresponding to the input sequence is compressed in comparison with the matrix representation of the input sequence.

Preferably the system, wherein the input sequence and the output sequence comprise video sequences.

Preferably the system, wherein the grid comprises a fixed coordinate grid.

Preferably the system, wherein the encoder comprises a positional encoder.

Preferably the system, wherein the convolution stage comprises a spatial-temporal convolution stage.

Preferably the system, wherein the multi-component representation of the output corresponding to the input sequence comprises a spatial-temporal representation of the output.

Preferably the system, wherein the multi-component representation of the output corresponding to the input sequence comprises a multi-view representation.

Preferably the system, wherein the convolutional upscaling stage includes a plurality of upscaling blocks each comprising an adaptive instance normalization (AdaIN) module.

Preferably the system, wherein each of the plurality of upscaling blocks further comprising a multilayer perceptron.

An embodiment of the present invention is as follows:
A method for use by a system including a hardware processor and a neural network (NN), the method comprising:

receiving, by the NN controlled by the hardware processor, an input sequence;
modeling, by the NN controlled by the hardware processor, the input sequence to generate a neural network representation of the input sequence;
compressing, by the NN controlled by the hardware processor, the neural network representation of the input sequence to generate a compressed neural network representation of the input sequence; and
generating, from the compressed neural network representation, by the NN controlled by the hardware processor, a compressed output sequence corresponding to the input sequence.

Preferably the method, wherein the input sequence and the output sequence comprise video sequences.

Preferably the method, wherein the neural network representation of the input sequence is compressed using entropy encoding.

Preferably the method, wherein the NN comprises one or more convolutional neural networks (CNNs).

Preferably the method, wherein compressing the neural network representation of the input sequence to generate the compressed neural network representation of the input sequence is performed by a first CNN of the one or more CNNs.

Preferably the method, wherein generating, from the compressed neural network representation, the compressed output sequence corresponding to the input sequence is performed by a second CNN of the one or more CNNs.

An embodiment of the present invention is as follows:

A method for use by a system including a hardware processor and a neural network (NN), the method comprising:

receiving, by the NN controlled by the hardware processor, a frame index of a video sequence;

constructing, by the NN controlled by the hardware processor, a matrix representation of the video sequence;

merging, by the NN controlled by the hardware processor, the matrix representation with a fixed coordinate grid to provide a spatial-temporal data structure;

generating, by the NN controlled by the hardware processor, using a first convolutional neural network (CNN) of the NN and the spatial-temporal data structure, a spatial-temporal representation of an output corresponding to the video sequence; and

upscaling the spatial-temporal representation of the output, by the NN controlled by the hardware processor and using a second CNN of the NN, to produce an output sequence corresponding to the video sequence.

Preferably the method, wherein the spatial-temporal representation of the output corresponding to the video sequence is compressed in comparison with the spatial-temporal data structure.

Preferably the method, wherein spatial-temporal representation of the output corresponding to the video sequence is compressed using entropy encoding.

Preferably the method, further comprising:

positional encoding the spatial-temporal data structure, by the NN controlled by the hardware processor, before generating, using the first CNN and the spatial-temporal data structure, the spatial-temporal representation of the output corresponding to the video sequence.

BRIEF DESCRIPTION OF THE DRAWINGS

Figure 1 shows a diagram of a system for generating entropy-constrained neural video representations, according to one exemplary implementation;

Figure 2 shows a diagram of a portion of a neural network depicting the present approach to Implicit Neural Representation-based (INR-based) video compression, according to one implementation;

Figure 3 depicts a forward and backward pass using the approach described above by reference to Figure 2, according to one implementation;

Figure 4 shows a diagram illustrating an exemplary neural network architecture for implementing the entropy-constrained neural video representation solution disclosed by the present application, according to one implementation;

Figure 5 shows a flowchart outlining an exemplary method for generating entropy-constrained neural video representations, according to one exemplary implementation; and

Figure 6 shows a flowchart outlining an exemplary method for generating entropy-constrained convolutional-based neural video representations, according to another exemplary implementation.

DETAILED DESCRIPTION

The following description contains specific information pertaining to implementations in the present disclosure. One skilled in the art will recognize that the present disclosure may be implemented in a manner different from that specifically discussed herein. The drawings in the present application and their accompanying detailed description are directed to merely exemplary implementations. Unless noted otherwise, like or corresponding elements among the figures may be indicated by like or corresponding reference numerals. Moreover, the drawings and illustrations in the present application are generally not to scale, and are not intended to correspond to actual relative dimensions.

As noted above, video compression is a long-standing and difficult problem that has inspired much research. The main goal of video compression is to represent a digital video (typically comprising a sequence of frames each represented by a two-dimensional (2D) array of pixels, RGB or YUV colors) with the minimum amount of storage requirements, while minimizing loss of quality. Although many advances have been made in the last decades in traditional video codecs, the advent of deep learning has inspired neural network-based approaches allowing new forms of video processing.

However, and as further noted above, for the task of lossy video compression, existing neural video representation (NVR) methods typically continue to be outperformed by traditional techniques. That performance gap can be explained by the fact that current NVR methods: i) use architectures that do not efficiently obtain a compact representation of temporal and spatial input coordinates, and ii) minimize rate and distortion disjointly by first overfitting a network on a video and then using heuristic techniques such as post-training quantization or weight pruning to compress the model.

The present application addresses the problem of video compression using an innovative approach in which the video is represented by a neural network. Such a neural network can then be lossy compressed and be used to reconstruct the video with minimal perceptual quality loss. In addition, the present application provides a novel convolutional-based neural network architecture to represent videos, formally model the entropy of that representation and define the compression of the representation as a rate-distortion (R-D) problem that can be optimized together while training the network. This new architecture allows faster encoding, i.e., training, and decoding time while providing a unified solution for video representation and compression. Moreover, the entropy-constrained neural video representation solution disclosed by the present application may advantageously be implemented as substantially automated systems and method.

It is noted that, as used in the present application, the terms "automation," "automated," "automating," and "automatically" refer to systems and processes that do not require the participation of a human system operator. Although, in some implementations, a system operator or administrator may review or even adjust the performance of the automated systems and according to the automated methods described herein, that human involvement is optional. Thus, the methods described in the present application may be performed under the control of hardware processing components of the disclosed automated systems.

As defined in the present application, the expression "neural network" (hereinafter "NN") refers to a mathematical model for making future predictions based on patterns learned from samples of data or "training data." For example, NNs may be trained to perform image processing, natural language understanding (NLU), and other inferential data processing tasks. Various learning algorithms can be used to map correlations between input data and output data. These correlations form the mathematical model that can be used to make future predictions on new input data. A "deep neural network," in the context of deep learning, may refer to a NN that utilizes multiple hidden layers between input and output layers, which may allow for learning based on features not explicitly defined in raw data. As used in the present application, a feature identified as a NN refers to a deep neural network.

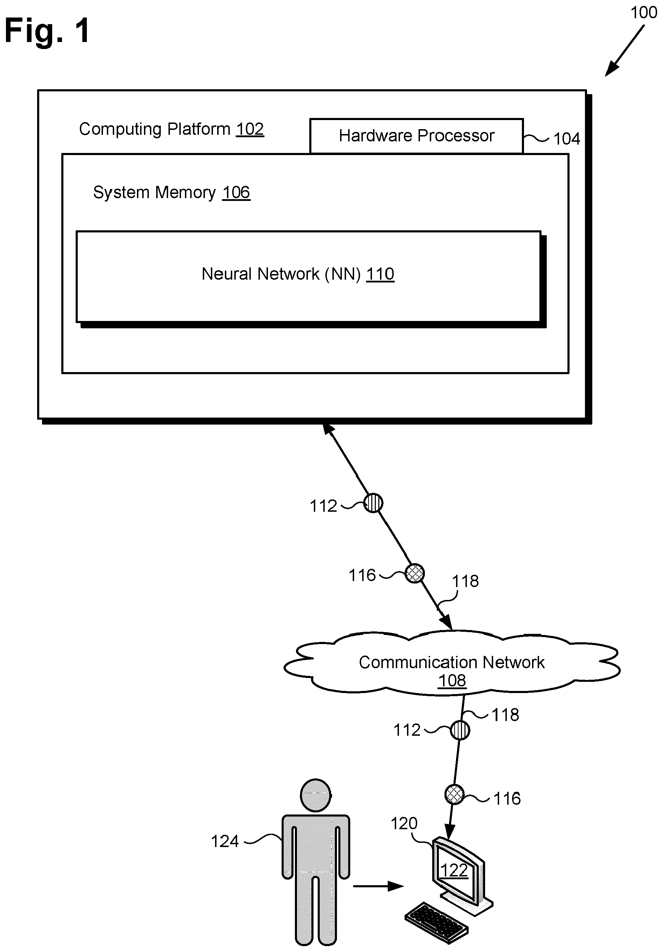

Figure 1 shows exemplary system 100 for generating entropy-constrained video representations, according to one implementation. As shown in Figure 1, system 100 includes computing platform 102 having hardware processor 104 and system memory 106 implemented as a computer-readable non-transitory storage medium. According to the present exemplary implementation, system memory 106 stores NN 110.

As further shown in Figure 1, system 100 is implemented within a use environment including communication network 108, user system 120 including display 122, and user 124 of user system 120. In addition, Figure 1 includes input sequence 112, which may take the form of a video sequence including actual video frames or a frame index of the video sequence identifying the video frames by frame number, for example, received by system 100, as well as output sequence 116 generated by system 100 using NN 110. Also shown in Figure 1 are network communication links 118 of communication network 108 interactively connecting system 100 and user system 120.

Although the present application refers to NN 110 as being stored in system memory 106 for conceptual clarity, more generally, system memory 106 may take the form of any computer-readable non-transitory storage medium. The expression "computer-readable non-transitory storage medium," as used in the present application, refers to any medium, excluding a carrier wave or other transitory signal that provides instructions to hardware processor 104 of computing platform 102. Thus, a computer-readable non-transitory storage medium may correspond to various types of media, such as volatile media and non-volatile media, for example. Volatile media may include dynamic memory, such as dynamic random access memory (dynamic RAM), while non-volatile memory may include optical, magnetic, or electrostatic storage devices. Common forms of computer-readable non-transitory storage media include, for example, optical discs such as DVDs, RAM, programmable read-only memory (PROM), erasable PROM (EPROM), and FLASH memory.

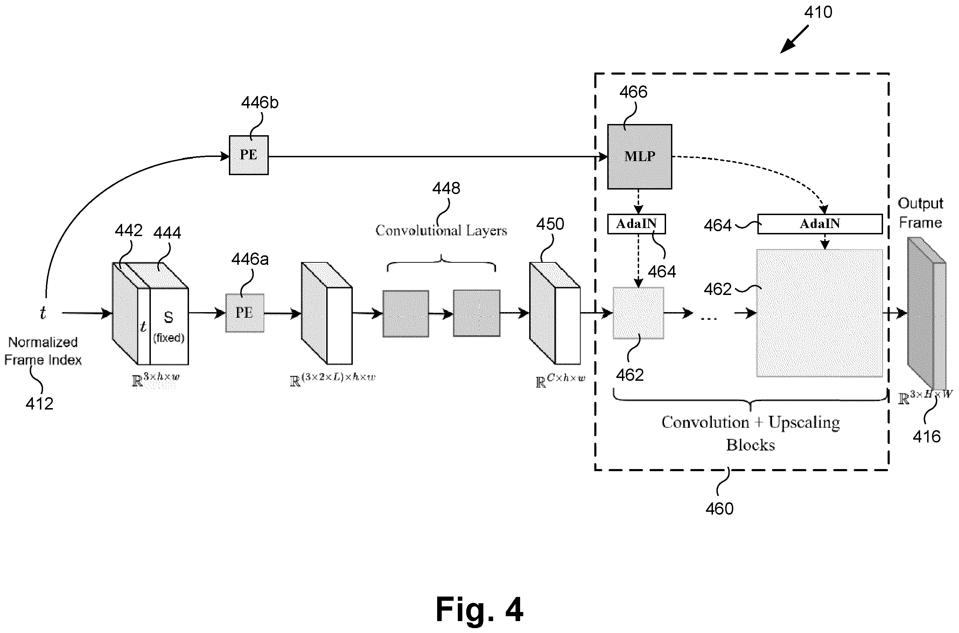

Although Figure 1 depicts system memory 106 storing NN 110 as residing on a single computing platform 102, that representation is also provided merely as an aid to conceptual clarity. More generally, system 100 may include one or more computing platforms 102, such as computer servers for example, which may be co-located, or may form an interactively linked but distributed system, such as a cloud-based system, for instance. As a result, hardware processor 104 and system memory 106 may correspond to distributed processor and memory resources within system 100. Consequently, in some implementations, components of NN 110 shown and described below in greater detail by reference to Figure 4, may be stored remotely from one another on the distributed memory resources of system 100.

Hardware processor 104 may include multiple hardware processing units, such as one or more central processing units, one or more graphics processing units, and one or more tensor processing units, one or more field-programmable gate arrays (FPGAs), custom hardware for machine-learning training or inferencing, and an application programming interface (API) server, for example. By way of definition, as used in the present application, the terms "central processing unit" (CPU), "graphics processing unit" (GPU), and "tensor processing unit" (TPU) have their customary meaning in the art. That is to say, a CPU includes an Arithmetic Logic Unit (ALU) for carrying out the arithmetic and logical operations of computing platform 102, as well as a Control Unit (CU) for retrieving programs from system memory 106, while a GPU may be implemented to reduce the processing overhead of the CPU by performing computationally intensive graphics or other processing tasks. A TPU is an application-specific integrated circuit (ASIC) configured specifically for AI processes such as machine learning.

In some implementations, computing platform 102 may correspond to one or more web servers accessible over a packet-switched network such as the Internet, for example. Alternatively, computing platform 102 may correspond to one or more computer servers supporting a wide area network (WAN), a local area network (LAN), or included in another type of private or limited distribution network. In addition, or alternatively, in some implementations, system 100 may utilize a local area broadcast method, such as User Datagram Protocol (UDP) or Bluetooth, for instance. Furthermore, in some implementations, system 100 may be implemented virtually, such as in a data center. For example, in some implementations, system 100 may be implemented in software, or as virtual machines. Moreover, in some implementations, communication network 108 may be a high-speed network suitable for high performance computing (HPC), for example a 10 GigE network or an Infiniband network.

It is further noted that, although user system 120 is shown as a desktop computer in Figure 1, that representation is provided merely by way of example. In other implementations, user system 120 may take the form of any suitable mobile or stationary computing device or system that implements data processing capabilities sufficient to provide a user interface, support connections to communication network 108, and implement the functionality ascribed to user system 120 herein. That is to say, in other implementations, user system 120 may take the form of a laptop computer, tablet computer, or smartphone, to name a few examples. Alternatively, in some implementations, user system 120 may be a "dumb terminal" peripheral device of system 100. In those implementations, display 122 may be controlled by hardware processor 104 of computing platform 102.

It is also noted that display 122 of user system 120 may take the form of a liquid crystal display (LCD), a light-emitting diode (LED) display, an organic light-emitting diode (OLED) display, a quantum dot (QD) display, or any other suitable display screen that perform a physical transformation of signals to light. Furthermore, display 122 may be physically integrated with user system 120 or may be communicatively coupled to but physically separate from user system 120. For example, where user system 120 is implemented as a smartphone, laptop computer, or tablet computer, display 122 will typically be integrated with user system 120. By contrast, where user system 120 is implemented as a desktop computer, display 122 may take the form of a monitor separate from user system 120 in the form of a computer tower.

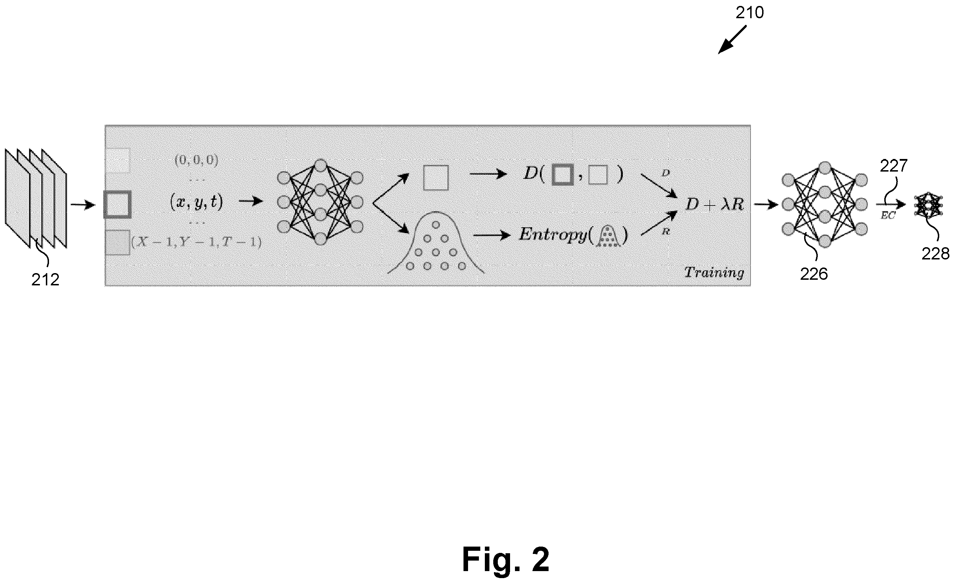

Figure 2 shows a diagram of a portion of NN 210 depicting the present approach to Implicit Neural Representation-based (INR-based) video compression, according to one implementation. It is noted that NN 210 corresponds in general to NN 110, in Figure 1, and those corresponding features may share any of the characteristics attributed to either corresponding feature by the present disclosure.

By way of overview, it is noted that the problem of video compression with neural representations may initially be approached from the perspective of compressing any signal in general. The purpose of the implementation shown in Figure 2 is to compactly represent a signal s: $\mathbb{R}^I \to \mathbb{R}^O$, using an implicit neural representation, where the superscript I denotes the dimension of the input coordinates and the superscript O denotes the dimension of the signal s. That implicit neural representation of the signal s is produced based on a set S of samples from the signal s where

$$S = \{(x_1, y_1), ..., (x_n, y_n) \mid x_i \in \mathbb{R}^I, y_i \in \mathbb{R}^O\}$$ and includes input coordinates $x_i$ as well as target values $y_i$. An implicit neural representation parametrized by $\theta$, $f_\theta: \mathbb{R}^I \to \mathbb{R}^O$ is used to approximate the signal s, taking as input any coordinate $x$ and producing an approximation to the target value $y$. Recovery of the signal s may be achieved by densely sampling from $f_\theta$, with the signal s effectively becoming stored in the parameters $\theta$.

In order to achieve compactness, the above described process may be framed as a Rate-Distortion (R-D) problem. In an R-D problem, the goal is to find the parameters $\theta$ that minimize the quantity $D + \lambda R$, where $R$ represents the cost of storing the parameters $\theta$, $D$ represents the distortion between $f_\theta$ and the signal s, and $\lambda$ establishes the trade-off between the two. The quantity $D + \lambda R$ serves as a surrogate for the signal $s$, and is minimized over the dataset S using gradient descent. A larger value of $\lambda$ will give more weight to $R$ in the optimization, resulting in a more compact representation of the signal s, potentially at the cost of some added distortion. A smaller value of $\lambda$ will have the opposite effect.

Thus, according to the exemplary implementation depicted in Figure 2, an implicit neural representation is used to fit input sequence 212. During the training process, the distortion metric $D$ described above is minimized together with the entropy of the neural network weights that implicitly represents the video. Input sequence 212 is modeled to generate neural network representation 226 of input sequence 212, which is then compressed using entropy encoding 227 to generate compressed neural network representation 228 of input sequence 212. It is noted that input sequence 212 corresponds in general to input sequence 112, in Figure 1, and those corresponding features may share any of the characteristics attributed to either corresponding feature by the present disclosure.

It is further noted that the distortion metric $D$ can be defined as any reasonable metric that captures the distortion of the signal $s$ and that it is desirable to optimize for. $R$ is defined as the amount of information encoded in the parameters $\theta$, and, as noted above, represents the cost of storing the parameters $\theta$. $R$ is given by Shannon's source coding theorem as:

$$-\log_2 p(\theta) \qquad \text{(Equation 1)}$$

with $p$ being the probability over the set of all weights. This can also be interpreted as a tight lower bound on the number of bits occupied by the entropy coded parameters. At the end of training, any form of entropy coding can be used to encode the weights, achieving a compact representation of the signal that approaches this lower bound. To make use of Shannon's source coding theorem, a discrete set of neural network weights must be used. However, for optimization, continuous weights are used.

In order to implement Shannon's source coding theorem using continuous weights , a quantization function $Q_\gamma$ may be defined, with learnable parameters $\gamma$, mapping the continuous weights to discrete symbols, as well as a dequantization function $Q_\gamma^{-1}$, mapping the symbols to the values at the center of their respective quantization bins. It is noted that one way of creating a discrete (i.e., quantized) representation of the continuous values of the neural network weights is to create quantization bins to which the continuous values are mapped. A simple example of the use of quantization bins is mapping values that are in the interval from (X - 0.5, X + 0.5) to the integer X. For instance, a sequence of continuous values (1.2, 1.34, 5.6, 2.67) could be mapped to (1, 1, 6, 3), which are discrete values and can be entropy encoded. It is further noted that $Q_\gamma^{-1}$ is not an exact inverse of Q, and thus the operation $Q_\gamma^{-1}\left(Q_\gamma(x)\right)$ incurs an error in recovering $x$ unless the value of $x$ is exactly one of the centers of the quantization bins.

Optimization is performed over the continuous parameters $\theta$, using the symbols $\hat{\theta} = Q_\gamma(\theta)$ to perform calculations for the rate, and using the weights with quantization error $Q_\gamma^{-1}\left(\hat{\theta}\right)$ to perform the forward pass with the neural network and obtain an approximation of the signal. In addition, the simplifying assumption is made that $\hat{\theta}$ are symbols produced by a memoryless source for which successive outputs are statistically independent. The optimization problem thus becomes:

$$\min_\theta \Sigma_{(x,y)\in S} D\left(f\left(x;\ Q_\gamma^{-1}\left(\hat{\theta}\right), y\right)\right) + \lambda \Sigma_{i=0}^{|\hat{\theta}|} -\log_2 \hat{p}\left(\hat{\theta}_i\right), \qquad \text{(Equation 2)}$$

where $\hat{p}$ is the probability mass function (pmf) of $\hat{\theta}$, which can be readily computed. To optimize this loss, the process minimizes the distortion by learning parameters $\theta$ that can appropriately represent the signal s, and $\gamma$ which provide a small enough quantization error. The distribution of $Q_\gamma(\theta)$ should also have a sufficiently small entropy to minimize the Rate term of the R-D performance.

Two sources of error may be identified that are introduced in the process described above. The first is the error introduced in approximating the signal $s$ with $f_\theta$, which can be minimized by increasing the number of parameters used to model $s$, or by making better choices in the architecture of the implicit neural representation, for example. The second source of error is the quantization error introduced by $Q_\gamma$, which can be minimized by shifting the centers of quantization bins appropriately or using more bins of smaller widths at an increased cost in the entropy of the distribution.

In order to define the function $Q_\gamma$, scalar quantization is used, taking the integers as a discrete set of symbols and defining $Q_\gamma$ as an affine transform with scale and shift parameters $\alpha$ and $\beta$ respectively, followed by rounding to the nearest integer:

$$Q_\gamma:\ \mathbb{R} \to \mathbb{Z}, Q_\gamma(x) = \left\lfloor \frac{x+\beta}{\alpha} \right\rceil, \gamma = \{\alpha, \beta\}, \qquad \text{(Equation 3)}$$

$Q_\gamma^{-1}$ is then naturally defined as:

$$Q_\gamma^{-1}(x) = x \times \alpha - \beta. \qquad \text{(Equation 4)}$$

Each layer of the neural network is quantized separately and has its own parameters s and $\phi$, which are themselves learned. This allows for some level of granularity in varying the quantization of different parameters, while not incurring too large of an overhead in the number of scale and shift parameters, which must also be stored.

One issue with this process is the non-differentiability of the rounding operation. There are two main approaches to this problem. The first is the replacement of the rounding operation with uniform noise of the same scale as the quantization bins. This is frequently used as a replacement for quantization. The second is the use of the Straight Through Estimator (STE), as known in the art, when computing the gradient for the rounding operation. Those respective approaches are defined as two functions, $Q_{noise}$ and $Q_{ste}$. Good results are obtained using $Q_{ste}$ for calculating the distortion metric, as it avoids the introduction of random noise, and using $Q_{noise}$ for calculating the entropy term.

Given $\hat{\theta}$, the minimum bit length to encode all the weights in the neural network can be calculated as follows:

$$\sum_{\omega \in \hat{\theta}} (-\log_2 \hat{p}(\omega)) \qquad \text{(Equation 5)}$$

where

$$\hat{p}(\omega) = \frac{1}{|\hat{\theta}|} \sum_{\omega' \in \hat{\theta}} (\mathbb{1}_{\omega'=\omega}). \qquad \text{(Equation 6)}$$

The problem with this approach lies in the non-differentiable operator $\mathbb{1}$. To train a network with gradient descent, a differentiable approximation to the discrete distribution of the weights is used. To provide this differentiable approximation, the discrete rate term can be replaced with a differential entropy by replacing Q with $Q_{noise}$. A parameterized function $p_\phi$ is then sought that approximates the probability density function of the parameters perturbed by uniform noise $\tilde{\theta}$.

The parameters of this approximation can be fit jointly with the parameters of the implicit neural representation using the same loss function presented above as Equation 2. Since only gradients from the Rate term of the R-D performance affect this model, that term is focused on. Additionally, in order to provide a better approximation of the underlying distribution, the approximation $p_\phi$ can be convolved with the standard uniform density.

Given $p_\phi$, the complete loss is defined by Equation 7 as:

$$\min_{\theta, \phi, \gamma} \sum_{(x,y) \in S} D\left(f\left(x; Q^{-1}(Q_{ste}(\theta, \gamma); \gamma)\right), y\right) + \lambda \frac{\sum_{l \in layers} -\log_2 p_\phi\left(\theta_l(\gamma_l)\right)}{frames \times h \times w}$$

where $\gamma$ collects all $\alpha$ and $\beta$ from each layer. The left term computes the distortion metric D over the dataset using the quantized weights, which are computed using the respective $\alpha$ and $\beta$ of each layer. The right term approximates the minimum bit length to encode the approximately quantized parameters using $p_\phi$. This rate term is divided by the total number of pixels, making $\lambda$ invariant to the resolution and number of frames of the video.

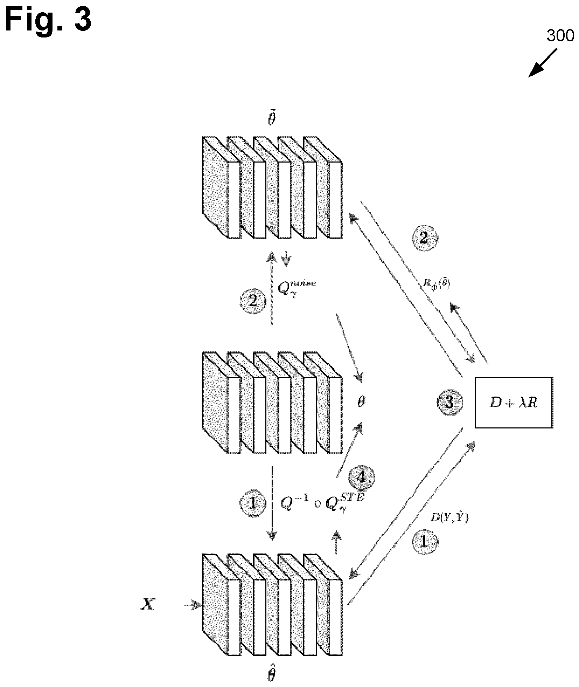

Figure 3 shows diagram 300 depicting a forward and backward pass using the quantization-aware training and entropy-penalty loss approach described above by reference to Figure 2, according to one implementation. In the forward pass (1), the distortion metric is computed given input coordinates X and weights with quantization error. To compute the rate term at (2), quantization is replaced with uniform noise. In the backward pass (3), gradients flow back to the parameters of the entropy model and the quantization parameters of each layer. In (4), the Straight Through Estimator (STE) is used to approximate the gradients from the quantization operation.

Figure 4 shows an exemplary architecture for NN 410 configured to implement the entropy-constrained neural video representation solution disclosed by the present application. As shown in Figure 4, NN 410 may include matrix expansion block 442 configured to construct a matrix representation of temporal input sequence t (hereinafter input sequence 412), shown as a normalized frame index, component merging block 444 configured to merge the matrix representation with a grid, which may be a fixed coordinate grid, and encoders 446a and 446b, shown as positional encoders (PEs) 446a and 446b in Figure 4, configured to receive an output of component merging block 444 and input sequence 412, respectively. With respect to the feature "normalized frame index" referenced above, it is noted that a frame index (unnormalized) is typically an integer (e.g., frame index = 0, frame index = 1, frame index = 15, and so forth). A normalized version could be merely converting the frame index integer to a continuous range, such as zero to one (0.0 - 1.0). For instance, if a video sequence has three hundred frames, normalized frame index = 0 could be equivalent to frame index = 0, normalized frame index = 0.5 could be equivalent to frame index = 150, and normalized frame index = 1 could be equivalent to frame index = 299.

NN 410 further includes convolution stage 448 configured to generate, using an output of encoder 446a, multi-component representation 450 of an output corresponding to input sequence 412, and convolutional upscaling stage 460 configured to produce, using multi-component representation 450 of the output, output sequence 416 corresponding to input sequence 412. As further shown in Figure 4, convolutional upscaling stage 460 of NN 410 includes a plurality of upscaling blocks 462 each comprising an adaptive instance normalization (AdaIN) module 464 and a multilayer perceptron (MLP) 466.

Input sequence 412 and NN 410 correspond respectively in general to input sequence 112/212 and NN 110/210 in Figures 1 and 2. Consequently, input sequence 112/212 and NN 110/210 may share any of the characteristics attributed to respective input sequence 412 and NN 410 by the present disclosure, and vice versa. Thus, although not shown in Figures 1 and 2, NN 110/210 may include features corresponding respectively to matrix expansion block 442, component merging block 444, encoders 446a and 446b, convolution stage 448 configured to generate multi-component representation 450, and convolutional upscaling stage 460.

In addition, output sequence 416, in Figure 4, corresponds in general to output sequence 116, in Figure 1. Consequently, output sequence 116 may share any of the characteristics attributed to output sequence 416 by the present disclosure, and vice versa. It is noted that, in some implementations, input sequence 112/212/412 and output sequence 116/416 may be or include video sequences.

Referring to Figure 4, it is further noted that the matrix representation of input sequence 412 produced by matrix expansion block 442 may take the form of a neural network representation of input sequence 412. That neural network representation of input sequence 412 is then compressed by convolution stage 448 to generate multi-component representation 450, which may be a compressed neural network representation of input sequence 412. That is to say, multi-component representation 450 is compressed in comparison with the matrix representation of input sequence 412. In some implementations, it may be advantageous or desirable for multi-component representation 450 of the output corresponding to the input sequence to be or include a spatial-temporal representation of the output. Thus, in those implementations, convolution stage 448 configured to generate multi-component representation 450 may be or include a spatial-temporal convolution stage.

However, in other implementations, multi-component representation 450 may include one or more of a stereoscopic coordinate or a light field coordinate and may be referred to as a multi-view representation of the output. By way of example, one extension of the present approach applies to use cases in which the video being represented is multi-view video, meaning that the input sequence may include an additional N-D spatial index. In the 3D stereoscopic video use case, for instance, the input would be (0, t) and (1, t), for left eye perspective and right eye perspective view video, respectively. In the light-field use case, for each time "t" there is a 2D-array of images, such that the input to the neural network is (u, v, t), representing angular position (u, v) at time t.

Regarding the approach to entropy-constrained neural video representation giving rise to the novel and inventive architecture of NN 140/440, it is noted that a frame-based implicit neural representation can provide significant advantages over pixel-based representation in terms of computational efficiency as well as R-D performance. However, the sole reliance by conventional frame-based implicit neural representations on fully connected layers in order to produce spatial-temporal features from the scalar time input results in an inefficient use of parameters.

According to the exemplary implementation shown in Figure 4, the present novel and inventive solution modifies the conventional architecture by making use of a coordinate grid into which the temporal input is fused or merged to provide positional information that aids the learning process of the neural network, as well by utilizing convolutional layers. In summary, the input sequence 412 may be a frame index normalized to be in the range [0; 1] may be received as an input, and a full resolution frame is provided as an output sequence 416. Using the normalized frame index as input a matrix, $T \in \mathbb{R}^{1 x h x w}$, is constructed by matrix expansion block 442, where every element is set to t. That constructed matrix is concatenated or otherwise merged, at component merging block 444, with the fixed coordinate grid, $M \in \mathbb{R}^{2 x h x w}$, where $M[0, h', w'] = \frac{w'}{W}$ and $M[1, h', w'] = \frac{h'}{H}$, for a target video with a resolution of $W \times H$. Positional encoding using PEs 446a and 446b is then applied to each element of the resulting tensor, followed by two convolutional layers, which may include $3 \times 3$ kernels and 160 channels, for example. Thus is generated a tensor of spatio-temporal features that is passed to convolutional upscaling stage 460 and is expressed by Equation 8 as:

$$\gamma(x) = \left( \sin(1.25^0 \pi x), \cos(1.25^0 \pi x), \dots, \sin(1.25^{L-1} \pi x), \cos(1.25^{L-1} \pi x) \right)$$

As in conventional Neural Representation of Videos (NeRV), convolutional upscaling stage 460 this is made up of a series of upscaling blocks, each including a convolutional layer and a PixelShuffle module. However, and as described above, each upscaling block 462 of convolutional upscaling stage 460 further includes AdaIN module 464 at the beginning of each block. In addition, for each upscaling block 462, there is additionally a small MLP 466 that processes the temporal input coordinate to produce the inputs for each AdaIN module. While this means that NN 410 technically contains non-convolutional layers, these MLPs make up a very small part of the total number of parameters of the model ($\approx$ 2% in the smallest model and $\approx$ 0.6% in the largest). For comparison purposes, we adopt the loss used in NeRV, shown below in Equation 9, as the distortion component of the loss. This is a mixture of L1 and Structural Similarity Index (SSIM), where $x$ is the original frame and $x'$ is the network output.

$$D(x, x') = 0.7 \times \|x - x'\|_1 + 0.3 \times \left( 1 - SSIM(x, x') \right) \qquad \text{(Equation 9)}$$

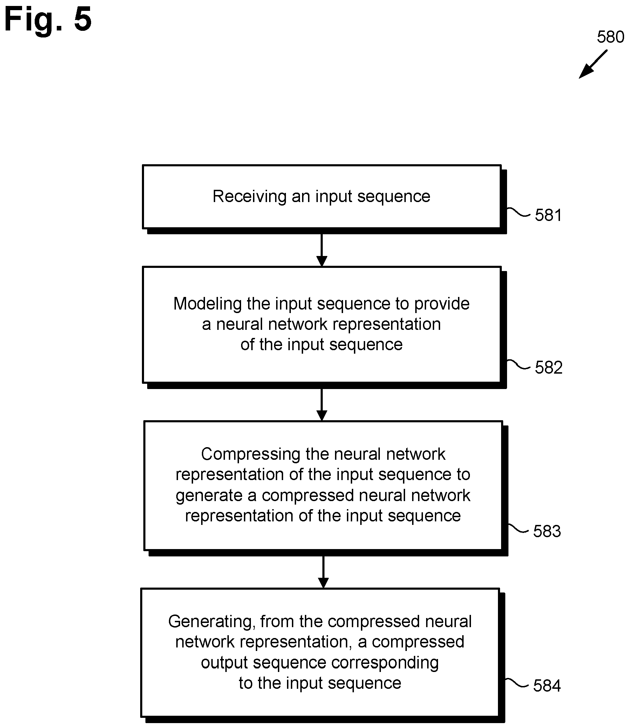

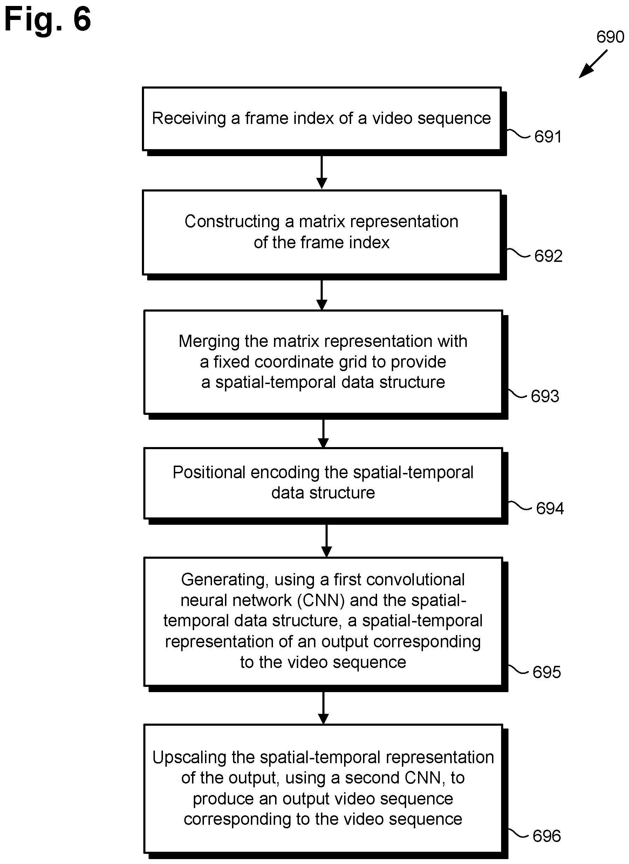

The functionality of system 100 including NN 110/410, shown in Figures 1 and 4, will be further described by reference to Figures 5 and 6. Figure 5 shows flowchart 580 outlining an exemplary method for generating entropy-constrained neural video representations, according to one exemplary implementation, while Figure 6 shows flowchart 690 outlining an exemplary method for generating entropy-constrained convolutional-based neural video representations, according to another exemplary implementation. With respect to the methods outlined in Figures 5 and 6, it is noted that certain details and features have been left out of flowcharts 580 and 690 in order not to obscure the discussion of the inventive features in the present application.

Referring to Figure 5 in combination with Figures 1 and 2, flowchart 580 includes receiving input sequence 112/212 (action 581). As noted above, in some implementations, input sequence 112/212 may take the form a video sequence or a frame index of a video sequence. As shown in Figure 1, input sequence 112/212 may be received by system 100 from user system 120, via communication network 108 and network communication links 118. Input sequence 112/212 may be received in action 581 by NN 110/210, controlled by hardware processor 104 of system 100.

Continuing to refer to Figure 5 in combination with Figures 1 and 2, flowchart 580 further includes modeling input sequence 112/212 to generate neural network representation 226 of input sequence 112/212 (action 582). Neural network representation 226 of input sequence 112/212 may be generated, in action 582, by NN 110/210, controlled by hardware processor 104 of system 100, in the manner described above by reference to Figure 2.

Continuing to refer to Figure 5 in combination with Figures 1 and 2, flowchart 580 further includes compressing neural network representation 226 of input sequence 112/212 to generate compressed neural network representation 228 of input sequence 112/212 (action 583). As noted above by reference to Figure 2, neural network representation 226 of input sequence may be compressed using entropy encoding 227. The compression of neural network representation 226 of input sequence 112/212 to generate compressed neural network representation of input sequence 112/212 may be performed by NN 110/210, controlled by hardware processor 104 of system 100, in the manner described above by reference to Figures 2, 3, and 4.

Referring to Figure 4 in combination with Figures 1, 2, and 5, in some implementations, NN 110/210/410 may include one or more CNNs. In some of those implementations, compressing the neural network representation of the input sequence 112 generate the compressed neural network representation of the input sequence may be performed by a first CNN, i.e., convolution stage 448, of the one or more CNNs.

Continuing to refer to Figure 5 in combination with Figures 1 and 2, flowchart 580 further includes generating, from compressed neural network representation 228 of input sequence 112/212, output sequence 116 corresponding to input sequence 112/212 (action 584). It is noted that output sequence 116 is a compressed output sequence relative to input sequence 112/212. Moreover, and as noted above, in some implementations, input sequence 112/212 and output sequence 116 may be or include a video sequences. Generation of output sequence 116 from compressed neural network representation 228 of input sequence 112/212 may be performed, in action 584, by NN 110/210, controlled by hardware processor 104 of system 100, in the manner described above by reference to Figures 2, 3, and 4. Referring to Figure 4, in some implementations in which NN 410 includes one or more CNNs, generation of the output sequence from the compressed neural network representation of the input sequence may be performed by a second CNN, i.e., convolutional upscaling stage 460, of the one or more CNNs.

Referring to Figure 6 in combination with Figures 1 and 4, the method outlined by flowchart 690 includes receiving input sequence 112/412 in the form of a frame index of a video sequence (action 691). As shown in Figure 1, input sequence 112/412 may be received by system 100 from user system 120, via communication network 108 and network communication links 118. Input sequence 112/412 may be received in action 691 by NN 110/410, controlled by hardware processor 104 of system 100.

Continuing to refer to Figure 6 in combination with Figures 1 and 4, flowchart 690 further includes constructing a matrix representation of the video sequence (action 692). The matrix representation of the video sequence may be constructed, in action 692, by NN 110/410, controlled by hardware processor 104 of system 100, and using matrix expansion block 442, in the manner described above by reference to Figure 4.

Continuing to refer to Figure 6 in combination with Figures 1 and 4, flowchart 690 further includes merging the matrix representation of the video sequence, which is a temporal sequence, with a fixed spatial coordinate grid to provide a spatial-temporal data structure in which the input sequence is concatenated to the fixed spatial coordinate grid (action 693). Action 693 may be performed by NN 110/410, controlled by hardware processor 104 of system 100, and using component merging block 444, in the manner described above by reference to Figure 4.

Continuing to refer to Figure 6 in combination with Figures 1 and 4, flowchart 690 may further include positional encoding the spatial-temporal data structure provided in action 693 (action 694). Action 694 may be performed by NN 110/410, controlled by hardware processor 104 of system 100, and using PE 446a in the manner described above by reference to Figure 4.

Continuing to refer to Figure 6 in combination with Figures 1 and 4, flowchart 690 further includes generating, using a first CNN of NN 110/410, i.e., convolution block 448, and the spatial-temporal data structure provided in action 693, multi-coordinate representation 450 of an output corresponding to the video sequence as a spatial-temporal representation of that output (action 695). It is noted that the spatial-temporal representation generated in action 695 is compressed in comparison with the spatial-temporal data structure provided in action 693. It is further noted that the spatial-temporal representation generated in action 695 may be compressed using entropy encoding. Action 695 may be performed by NN 110/410, controlled by hardware processor 104 of system 100, in the manner described above by reference to Figure 4.

Continuing to refer to Figure 6 in combination with Figures 1 and 4, flowchart 690 further includes upscaling the spatial-temporal representation of the output generated in action 695, using a second CNN of NN 110/410, i.e., convolutional upscaling block 460, to produce output sequence 116/416 corresponding to the video sequence for which the frame index was received as input sequence 112/412 in action 691 (action 696). It is noted that output sequence 116/416 produced in action 696 is a compressed video sequence relative to the video sequence for which the frame index was received as input sequence 112/412 in action 691. Output sequence 116/416 may be produced, in action 696, by NN 110/410, controlled by hardware processor 104 of system 100, in the manner described above by reference to Figure 4.

With respect to the methods outlined by flowcharts 580 and 690, it is noted that actions 581, 582, 583, and 584, and/or actions 691, 692, 693, 695, and 696, or actions 691, 692, 693, 694, 695, and 696, may be performed in a substantially automated process from which human involvement can be omitted.

Thus, the present application discloses systems and methods for generating entropy-constrained neural video representations that address and overcome the deficiencies in the conventional art. The fully convolutional architecture for neural video representation disclosed in the present application results in faster training (encoding) and decoding and better image quality for the same number of parameters of previous solutions for neural video representation. Moreover, previous solutions for video compression using neural video representation treat the problem of compressing the neural representation as a separate process, using heuristic techniques such as post-training quantization or weight pruning. With the end-to-end training procedure of the present disclosure, all quantization parameters learned are optimized, and post-training operations are unnecessary.

The present entropy-constrained neural video representation solution advances the state-of-the-art by introducing a novel and inventive compact convolutional architecture for neural video representation, which results in better representation capacity than NeRV and faster encoding and decoding than expedite neural video representation (E-NeRV). In addition, the entropy-constrained neural video representation solution disclosed herein formally defines signal compression with implicit neural representations as a R-D problem by modeling the entropy of the weights and using quantization-aware training, thereby advantageously allowing end-to-end training, without the need of post-training techniques such as pruning.

From the above description it is manifest that various techniques can be used for implementing the concepts described in the present application without departing from the scope of those concepts. Moreover, while the concepts have been described with specific reference to certain implementations, a person of ordinary skill in the art would recognize that changes can be made in form and detail without departing from the scope of those concepts. As such, the described implementations are to be considered in all respects as illustrative and not restrictive. It should also be understood that the present application is not limited to the particular implementations described herein, but many rearrangements, modifications, and substitutions are possible without departing from the scope of the present claims.

**Claims**

1. A system comprising:

   a matrix expansion block configured to construct a matrix representation of an input sequence;
   a component merging block configured to merge the matrix representation with a grid;
   an encoder configured to receive an output of the component merging block;
   a convolution stage configured to generate, using an output of the encoder, a multi-component representation of an output corresponding to the input sequence; and
   a convolutional upscaling stage configured to produce, using the multi-component representation of the output, an output sequence corresponding to the input sequence.

2. The system of claim 1, wherein the multi-component representation of the output corresponding to the input sequence is compressed in comparison with the matrix representation of the input sequence.

3. The system of claim 1 or 2, wherein the input sequence and the output sequence comprise video sequences.

4. The system of at least one of claims 1 to 3, wherein the grid comprises a fixed coordinate grid.

5. The system of at least one of claims 1 to 4, wherein the encoder comprises a positional encoder.

6. The system of at least one of claims 1 to 5, wherein the convolution stage comprises a spatial-temporal convolution stage.

7. The system of at least one of claims 1 to 6, wherein the multi-component representation of the output corresponding to the input sequence comprises a spatial-temporal representation of the output.

8. The system of at least one of claims 1 to 7, wherein the multi-component representation of the output corresponding to the input sequence comprises a multi-view representation.

9. The system of at least one of claims 1 to 8, wherein the convolutional upscaling stage includes a plurality of upscaling blocks each comprising an adaptive instance normalization (AdaIN) module.

10. The system of claim 9, wherein each of the plurality of upscaling blocks further comprising a multilayer perceptron.

# Fig. 1

100

Computing Platform 102

Hardware Processor 104

System Memory 106

Neural Network (NN) 110

112

116

118

Communication Network 108

118

112

116

124

120

122

**Fig. 2**

# Fig. 3

300

Fig. 4

# Fig. 5

580

```
┌─────────────────────────────────────────┐
│                                          │
│         Receiving an input sequence      │  ～ 581
│                                          │
└─────────────────────────────────────────┘
                    │
                    ▼
┌─────────────────────────────────────────┐
│                                          │
│    Modeling the input sequence to provide│
│      a neural network representation     │  ～ 582
│            of the input sequence         │
│                                          │
└─────────────────────────────────────────┘
                    │
                    ▼
┌─────────────────────────────────────────┐
│                                          │
│        Compressing the neural network    │
│    representation of the input sequence to│
│    generate a compressed neural network  │  ～ 583
│    representation of the input sequence   │
│                                          │
└─────────────────────────────────────────┘
                    │
                    ▼
┌─────────────────────────────────────────┐
│                                          │
│    Generating, from the compressed neural│
│    network representation, a compressed  │
│       output sequence corresponding      │  ～ 584
│            to the input sequence         │
│                                          │
└─────────────────────────────────────────┘
```

# Fig. 6

690

```
┌─────────────────────────────────────────┐
│   Receiving a frame index of a video     │
│                sequence                  │ ⌐ 691
└─────────────────────────────────────────┘
                    │
                    ▼
┌─────────────────────────────────────────┐
│    Constructing a matrix representation  │
│          of the frame index              │ ⌐ 692
└─────────────────────────────────────────┘
                    │
                    ▼
┌─────────────────────────────────────────┐
│   Merging the matrix representation with │
│      a fixed coordinate grid to provide  │
│      a spatial-temporal data structure   │ ⌐ 693
└─────────────────────────────────────────┘
                    │
                    ▼
┌─────────────────────────────────────────┐
│   Positional encoding the spatial-       │
│        temporal data structure           │ ⌐ 694
└─────────────────────────────────────────┘
                    │
                    ▼
┌─────────────────────────────────────────┐
│   Generating, using a first convolutional│
│    neural network (CNN) and the spatial- │
│  temporal data structure, a spatial-     │
│  temporal representation of an output    │
│  corresponding to the video sequence     │ ⌐ 695
└─────────────────────────────────────────┘
                    │
                    ▼
┌─────────────────────────────────────────┐
│ Upscaling the spatial-temporal           │
│ representation of the output, using a    │
│ second CNN, to produce an output video   │
│ sequence corresponding to the video      │
│ sequence                                 │ ⌐ 696
└─────────────────────────────────────────┘
```

Europäisches
Patentamt

European
Patent Office

Office européen
des brevets

# EUROPEAN SEARCH REPORT

Application Number

EP 23 20 8598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | GOMES CARLOS ET AL: "Video Compression with Entropy-Constrained Neural Representations", 2023 IEEE/CVF CONFERENCE ON COMPUTER VISION AND PATTERN RECOGNITION (CVPR), IEEE, 17 June 2023 (2023-06-17), pages 18497-18506, XP034400935, DOI: 10.1109/CVPR52729.2023.01774 [retrieved on 2023-08-22] * the whole document * | 1-10 | INV. H04N19/503 H04N19/597 |
| X | ZIZHANG LI ET AL: "E-NeRV: Expedite Neural Video Representation with Disentangled Spatial-Temporal Context", ARXIV.ORG, CORNELL UNIVERSITY LIBRARY, 201 OLIN LIBRARY CORNELL UNIVERSITY ITHACA, NY 14853, 17 July 2022 (2022-07-17), XP091273726, * abstract; figures 2, 8 * * page 7 * * Sections 5.4 and A.3 * | 1-10 | |

-/--

TECHNICAL FIELDS
SEARCHED        (IPC)

H04N

The present search report has been drawn up for all claims

| Place of search | Date of completion of the search | Examiner |
|---|---|---|
| The Hague | 13 March 2024 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt / European Patent Office / Office européen des brevets | **EUROPEAN SEARCH REPORT** | Application Number<br>**EP 23 20 8598** |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SICHENG LI ET AL: "[INVR] Review of related technology in INVR", 140. MPEG MEETING; 20221024 – 20221028; MAINZ; (MOTION PICTURE EXPERT GROUP OR ISO/IEC JTC1/SC29/WG11), , no. m60664 15 September 2022 (2022-09-15), XP030304288, Retrieved from the Internet: URL:https://dms.mpeg.expert/doc_end_user/documents/140_Mainz/wg11/m60664-v2-Reviewofrelatedtechnologyin INVR_upload_v2.zip Review of related technology in INVR_upload_v2.docx [retrieved on 2022-09-15] * Section 3.1 * ----- | 8 | |
| A | THOMAS BIRD ET AL: "3D Scene Compression through Entropy Penalized Neural Representation Functions", ARXIV.ORG, CORNELL UNIVERSITY LIBRARY, 201 OLIN LIBRARY CORNELL UNIVERSITY ITHACA, NY 14853, 26 April 2021 (2021-04-26), XP081943994, * abstract; figure 1 * ----- | 1-10 | |

TECHNICAL FIELDS SEARCHED (IPC)

The present search report has been drawn up for all claims

| Place of search | Date of completion of the search | Examiner |
|---|---|---|
| The Hague | 13 March 2024 | Streich, Sebastian |

EPO FORM 1503 03.82 (P04C01)